# EUROPEAN PATENT SPECIFICATION

(11) **EP 1 938 467 B1**
(45) Date of publication and mention of the grant of the patent: **20.04.2011**
(21) Application number: 06795486.7
(22) Date of filing: 14.09.2006
(51) Int. Cl.: H04B 3/54

(54) **METHOD, DEVICES AND SYSTEM FOR TRANSMITTING INFORMATION ON POWER SUPPLY ELECTRIC LINE**
VERFAHREN, EINRICHTUNGEN UND SYSTEM ZUM ÜBERTRAGEN VON INFORMATIONEN AUF ELEKTRISCHEN STROMVERSORGUNGSLEITUNGEN
PROCÉDÉ, DISPOSITIFS ET SYSTÈME POUR TRANSMETTRE DES INFORMATIONS SUR UNE LIGNE ÉLECTRIQUE D'ALIMENTATION

(30) Priority: 17.10.2005 IT TO20050736
(43) Date of publication of application: 02.07.2008
(73) Proprietor: Indesit Company S.p.A., 60044 Fabriano (AN) (IT)
(72) Inventor: BURZELLA, Luciano, I-60044 Fabriano (IT); NOCERA, Fortunato, I-60044 Fabriano (IT); MORBIDELLI, Lorenzo, I-60015 Falconara Marittima (IT); VINERBA, Brunetta, I-06061 Castiglione del Lago (IT); CONTI, Massimiliano, I-06062 Citta'Della Pieve (IT)
(74) Representative: Dini, Roberto
(86) International application number: PCT/IB2006/002532
(87) International publication number: WO 2007/045946

(56) References cited:
- WO-A-97/26751
- WO-A-2004/090833
- WO-A2-01/90828

## Description

The present invention relates to a method for transmitting information in particular from a control and/or monitoring device to an electric appliance, in particular a household appliance, through the electric power supply line of said electric appliance. Furthermore, the present invention also relates to a control and/or monitoring device, an electric appliance, in particular a household appliance, and a system adapted to implement said method.

The need of transmitting information to an electric appliance, in particular a household appliance, starting from a control and/or monitoring device being external thereto, in order to modify and/or extend the performance of the household appliance has now become widespread. In fact, several techniques are known in the art for providing said transmission of information between a household appliance and an external control and/or monitoring apparatus. In particular, said external apparatus can communicate with the household appliance over a serial communication line, but this technique suffers from the drawback of requiring additional wiring. Radiofrequency communication has also been provided, but this communication technique involves the need of incorporating a communication node inside the household appliance. The high cost of said communication node and the difficulty in installing it inside the household appliance (the external frame thereof is often made of metal) have prevented a large-scale diffusion of radiofrequency as a communication means between the household appliance and an external control and/or monitoring apparatus.

As an alternative to serial and radiofrequency communication, it has been thought of using the same power supply electric network of the household appliance as a bidirectional communication means between the household appliance and the external control and/or monitoring device. Various techniques known as "power line communication", or conveyed wave, have thus been set up, which use suitable modems capable of sending and receiving information, respectively through specific modulation and demodulation of the line voltage: electric signals having a relatively low amplitude and a relatively high frequency are superimposed on the mains voltage and flow from the transmitter to the receiver by using the power supply electric line as a transmission means. Due to the very high cost of said modems, power line communication has not yet succeeded to become a standard for communications from/to the household appliance.

In order to overcome said drawback, a communication technique has been proposed and described in WO02/21664A1, said technique being called "power modulation". This technique is an asymmetric technique of communication on power supply electric line, wherein the transmission of data from the household appliance to the external control and/or monitoring device takes place by using, as a method for coding binary information, controlled electric power absorptions, provided through solid state switches, in particular through triacs, whereas the transmission of data from the external control and/or monitoring device to the household appliance takes place by using, as a method for coding binary information, appropriate short interruptions in the electric power supply alternating voltage (said interruptions being called "network holes"), also provided through solid state switches, in particular through triacs. The above-described power modulation, however, although it allows to overcome said drawbacks related to power line communication, suffers from a number of drawbacks related to data transmission from the external control and/or monitoring device to the household appliance by means of the network holes technique. In fact, since at the network holes there is a short interruption of the power supply of the household appliance, it is necessary that said network holes are appropriately spaced out by whole voltage waves, so that on average the household appliance continues to be supplied correctly. This requirement lowers the information transmission frequency from the external control and/or monitoring device to the household appliance. Furthermore, said information transmission can only occur at suitable moments, wherein the impedance of the load represented by the household appliance is such as not to generate, at the network holes, relevant noise (in the form of spurious harmonics) toward the electric network, which would otherwise require the installation of costly and bulky filtering systems (resulting in a substantial reduction in the economic advantage of "power modulation" compared to power line communication) in order to comply with electromagnetic compatibility laws, in particular those regulating emissions carried on the power supply network.

WO 01/90828 discloses a method for transmitting information on power supply electric line from a first device to an electric appliance, said device bein interposed between an electric energy source and said electric appliance, said device being supplied with alternating voltage and said electric appliance being supplied with alternating voltage through said device. WO 01/90828 does not disclose applying this method to household appliance.

WO9726751 discloses a power-line communication system for use with a conventional AC source having a hot wire and a neutral wire includes a pulse transmitter and at least one receiver connected downstream from the pulse transmitter. The pulse transmitter is coupled between the hot wire of the AC source and either the neutral wire of the AC source or earth ground. Each receiver is coupled to the AC source. The pulse transmitter includes a control circuit for controlling the conduction of a shunt circuit and sends messages to the receivers by inducing momentary pulses in the AC voltage supplied by the AC source. The shunt circuit includes a power switch and an energy clamp circuit for limiting the amplitude and the duration of the current through the power switch and the pulse induced in the AC line voltage. Each receiver detects the momentary pulses and translates a given sequence of pulses into its corresponding message. In a preferred embodiment, the pulse transmitter is used to send control commands to one or more controllable electronic ballasts for powering fluorescent lamps.

The object of the present invention is to overcome the above-described drawbacks of the data transmission technique based on network holes, while at the same time retaining its advantages in terms of simplicity and low cost.

Said object is achieved through the transmission method, the transmission and reception devices and the system consisting of said devices having the features set out in the annexed claims, which form an integral part of the present description.

The general idea at the basis of the present invention is to transmit information, typically from the control and/or monitoring device to the electric appliance, through variations in the power supply voltage of the electric appliance, which can be detected by suitable receiver means incorporated in the electric appliance.

In particular, the power supply voltage of the electric appliance is provided through a point-to-point connection by the control and/or monitoring device, which in turn is connected to an electric energy source; according to this architecture, the control and/or monitoring system can generate controlled variations in the power supply voltage of the electric appliance, in particular reductions thereof having controlled amplitude and duration. Said variations, which are limited compared to the instantaneous value of the power supply voltage, do not produce any significant reduction in the energy flow supplied to the electric appliance, and therefore this transmission technique has a very light impact on the power supply of the electric appliance. The transmitted information is coded in said variation, in particular in the time position of said variation.

The method, devices and system being the subject of the present invention will become apparent, together with their further advantages, from the following detailed description and from the annexed drawings, which are supplied by way of non-limiting example, wherein:
- Fig. 1 shows schematically a possible architecture of the system according to the present invention;
- Fig. 2 shows schematically a possible application of the method according to the present invention on a half wave of the alternating voltage supplied to an electric appliance;
- Fig. 3 shows schematically a possible sequence of waves of the alternating voltage supplied to an electric appliance, used for transmitting information according to the method being the subject of the present invention;
- Fig. 4 shows schematically a possible application of a first advantageous variant of the method according to the present invention on a half wave of the alternating voltage supplied to an electric appliance;
- Fig. 5 shows schematically a possible sequence of waves of the alternating voltage supplied to an electric appliance, used for transmitting information according to the above first variant of the method being the subject of the present invention;
- Fig. 6 shows schematically a possible application of a second advantageous variant of the method according to the present invention on a half wave of the alternating voltage supplied to an electric appliance, and
- Fig. 7 shows schematically a possible sequence of waves of the alternating voltage supplied to an electric appliance, used for transmitting information according to the above second variant of the method being the subject of the present invention.

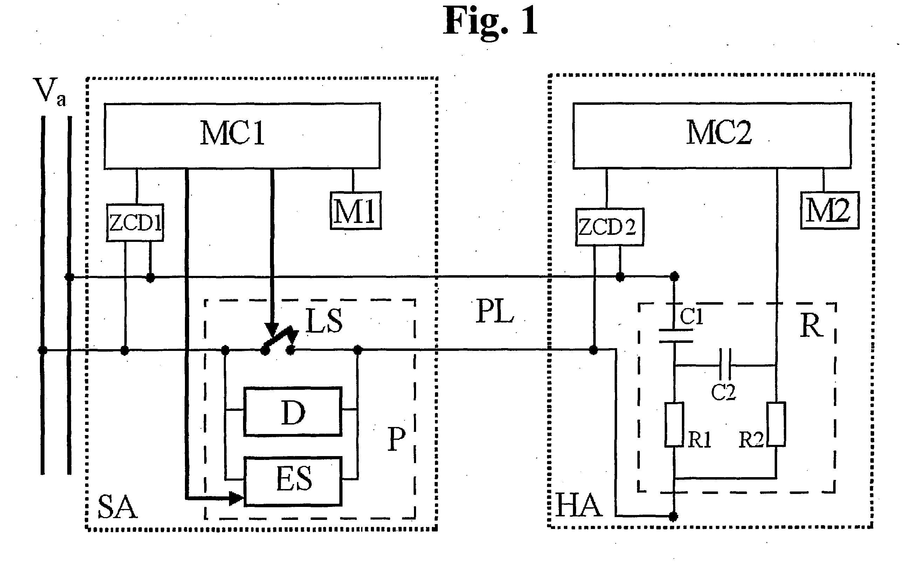

Fig. 1 illustrates, by means of a block diagram, the architecture of a system according to the present invention. Said system comprises a control and/or monitoring device SA, connected to an electric energy source Vₐ, and an electric appliance HA, in particular a household appliance, connected to the device SA through the electric power line PL. The device SA is therefore interposed between the electric energy source Vₐ and the electric appliance HA, and is supplied with alternating voltage. The electric appliance HA, in particular a household appliance, is supplied with alternating voltage over the line PL through the control and/or monitoring device SA. The device SA and the electric appliance HA comprise electronic control systems comprising first electronic control means MC1 and second electronic control means MC2, respectively.

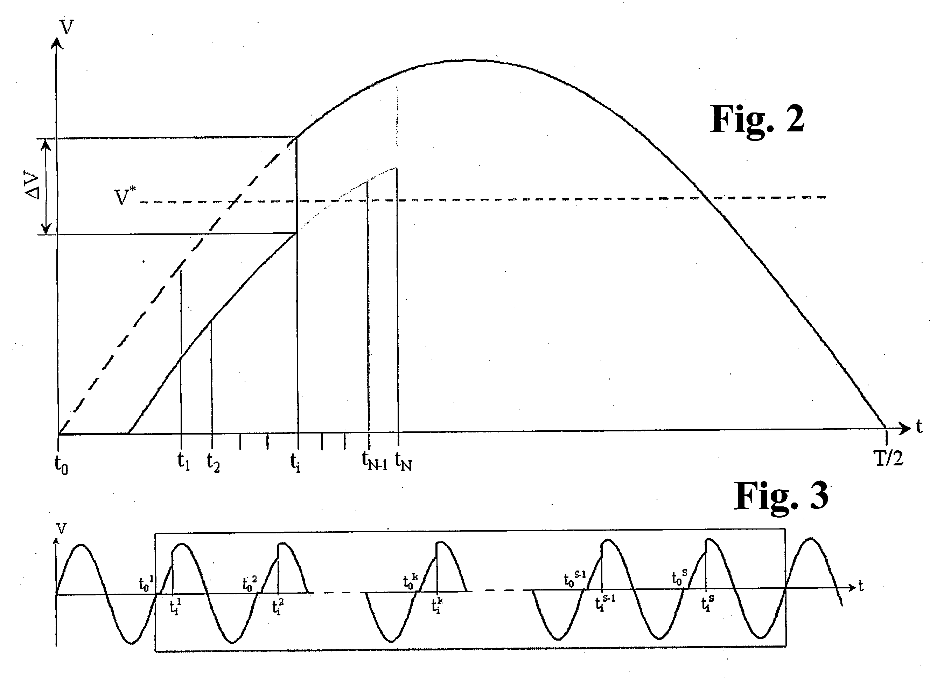

In Fig. 2, a dashed line indicates a half wave of the alternating voltage supplied to a control and/or monitoring device SA by an electric energy source Vₐ. By way of example and not by way of limitation, it may be assumed that said half wave belongs to a sinusoidal wave having a period T of 20 ms. The continuous line indicates the trend of the alternating power supplied, through the control and/or monitoring device SA, to an electric appliance HA, preferably a household appliance. It can be seen that, in the time interval comprised between to and tᵢ, the device SA introduces a voltage reduction which causes, at the time tᵢ, a positive variation in the power supply voltage of the electric appliance HA, the amplitude thereof being ΔV. Preferably, to avoid subtracting much energy from the electric appliance HA, the variation ΔV must be such that ΔV is suitably limited compared to the active value V* of the power supply voltage. By way of example and not by way of limitation, a predetermined amplitude value of the variation ΔV may be chosen within an interval between 5% and 15% of the active value V*, the value ΔV being preferably equal to approximately 20V when V* is 230V.

Hereafter and in the annexed diagrams it has been assumed, by way of example, that the variation ΔV is positive, since it is supposed to be generated in the positive half wave of the alternating voltage supplied to the electric appliance HA. This assumption is however made only by way of example, and should not therefore be interpreted as a limitation of the present invention. As a matter of fact, the variation ΔV may as well be assumed to be negative, when generated in the negative half wave of the alternating voltage supplied to the electric appliance HA.

The time tᵢ belongs to a set of predetermined values of time t₁,...,t_{N}, within the duration T/2 of a half wave of the alternating voltage, with which as many N pieces of information may be univocally associated, N being ≥ 1. A coding is thus performed according to which the value of time tᵢ at which the variation is generated, measured starting from a predetermined condition of the alternating voltage, is advantageously univocally representative of a predetermined piece of information.

The method according to the present invention may be advantageously used for transmitting information over the electric power line PL from the control and/or monitoring device SA to the electric appliance HA, in particular a household appliance. The device SA is interposed between the electric energy source Vₐ and the electric appliance HA. The power supply voltages of the control and/or monitoring device SA and of the electric appliance HA are alternating voltages.

The method according to the present invention comprises the steps of:
i) associating a piece of information to be transmitted with a value of time tᵢ, the value of time tᵢ being comprised within a set of predetermined values of time t₁,...,t_{N}, which are measured starting from the occurrence of a predetermined condition relating to the alternating voltage supplied to the device SA, and
ii) generating, substantially at the value of time t;, a variation ΔV in the alternating voltage supplied to the electric appliance HA.

During the step i) of the above method, a piece of information to be transmitted is typically (and preferably) univocally associated with a value of time tᵢ.

By way of example and not by way of limitation, the variation ΔV may be provided by reducing the alternating voltage supplied to the electric appliance HA and by stopping the alternating voltage reduction at the value of time tᵢ.

This generates the positive voltage variation ΔV on the power supply line PL of the electric appliance HA at the time tᵢ; said variation, generated by the device SA, propagates over the line PL toward the electric appliance HA, thus transmitting the coded information by associating it with the time tᵢ. At the level of the appliance HA, said variation ΔV is then detected and the value of time tᵢ* at which said detection takes place is measured starting from the occurrence of a predetermined condition relating to the alternating voltage supplied to the electric appliance HA. Subsequently, the decoding takes place by associating the corresponding information with the value of time tᵢ*.

As a predetermined condition which values of time must be referred to, one may preferably use the zero crossing condition of the power supply alternating voltage, both for the measurement of tᵢ by the control and/or monitoring device SA and for the measurement of tᵢ* by the electric appliance HA. In fact, said condition may be detected through a simple circuit which is generally present in the electronic control systems of electric appliances like the appliance HA, thus requiring no additional cost.

Advantageously, the transmitted information may consist of an array of n bits, which allow to obtain N=2" distinct combinations. The information may therefore be coded by associating one of the N predetermined values of time tᵢ at which the variations ΔV may be generated with each distinct combination. For example, assuming that 4-bit arrays are to be transmitted, the above-described method will require 16 distinct values tᵢ at which the variations ΔV may be generated.

The variation ΔV in the alternating voltage supplied to the electric appliance HA has suitable features which allow it to be distinguished from any fluctuations possibly present on the power line PL due to noise of various kinds: amplitude and velocity characterize the variation ΔV generated for transmitting the information, thus differentiating it from a generic variation due to external interference factors or to the very nature of the sinusoidal wave. The electric appliance HA comprises suitable receiver means R which, being sized appropriately, are capable of selectively detecting the variations ΔV in the power supply alternating voltage, which are associated with the transmission of information. Subsequently, the second electronic control means MC2 are adapted to evaluate the time position of the variation ΔV, expressed as a value of time tᵢ* (measured on the appliance HA), and to decode it in order to extract the transmitted information.

Fig. 1 illustrates, by way of example and not by way of limitation, a possible architecture of the system according to the present invention, which comprises a control and/or monitoring device SA, connected to an electric energy source Vₐ, and an electric appliance HA, connected to the device SA through the electric power line PL.

The device SA comprises internally the first electronic control means MC1, preferably a microcontroller, wherewith the first non-volatile memory M1 is associated. Said means MC1 perform the function of controlling a switch LS, preferably a relay contact, and an electronic switch ES.

The transmitter circuit P, arranged in series between the electric energy source Vₐ and the power supply line PL of the electric appliance HA, comprises three distinct electric branches arranged in parallel: a first branch comprising the switch LS, a second branch comprising electronic means D, preferably a pair of Zener diodes connected in series and with common anode or cathod, adapted to cause a voltage drop when current flows therethrough, and a third branch comprising the electronic switch ES, which ensures a time-accurate control of the closing and/or opening instants. The electronic switch ES may comprise at least one power actuator, e.g. a triac.

The switch LS is normally kept closed in the operating state of the control and/or monitoring device SA, wherein the device SA has not to carry out any transmission, so that the voltage on the line PL substantially coincides with the voltage of the source Vₐ: it follows that no current flows through and no power is dissipated on the electronic switch ES. Before one or more transmissions are carried out, the first electronic control means MC1 set the device SA to transmission mode: this occurs by closing the electronic switch ES and opening the switch LS. In this mode, the first means MC1 can, by controlling subsequent closing and/or opening operations of the electronic switch ES, generate variations ΔV of the alternating voltage supplied to the electric appliance HA, in accordance with the above-described method.

In particular, the switch LS being open, if the electronic switch ES is also open, the current absorbed on the power line PL by the electric appliance HA flows over the second branch of the transmitter circuit P, thereby generating a voltage drop of amplitude ΔV (which depends on the characteristics of the electronic means D, e.g. approximately corresponding to the Zener voltage of one of the two Zener diodes connected in series): thus, the instantaneous value of the alternating voltage on the line PL is reduced in amplitude by a quantity equal to ΔV compared to that of the alternating voltage of the electric energy source Vₐ. Instead, if the switch LS is open and the electronic switch ES is closed, the current absorbed on the power line PL by the electric appliance HA flows over the third branch of the transmitter circuit P, thereby generating a negligible voltage drop: the instantaneous value of the amplitude of the alternating voltage on the line PL is thus essentially equal to the instantaneous value of the amplitude of the alternating voltage of the source Vₐ. The first electronic control means MC1, by controlling subsequent closing and/or opening operations of the electronic switch ES, generate a reduction having a controlled duration in the alternating voltage supplied to the electric appliance HA; the closing of the electronic switch ES at the time tᵢ causes said voltage reduction to end at the value of time tᵢ chosen in order to code a predetermined piece of information.

The value of time tᵢ is measured starting from a predetermined condition of the alternating voltage supplied to the control and/or monitoring device SA. For this purpose, the device SA comprises first detection means ZCD1, preferably adapted to detect the zero crossing performed by the alternating voltage supplied to the control and/or monitoring device SA and to signal it to the first electronic control means MC 1. In order to code the information to be sent to the electric appliance HA, the first electronic control means MC1 may use the first non-volatile memory M1, which stores, e.g. as a table or a formula, relations between predetermined information and corresponding values of time tᵢ.

The electric appliance HA comprises internally the second electronic control means MC2, preferably a microcontroller, wherewith the second non-volatile memory M2 is associated, and a receiver circuit R, adapted to detect a positive variation ΔV in the power supply alternating voltage on the electric line PL and to signal it to the second electronic control means MC2. By way of example and not by way of limitation, said receiver circuit R comprises a series of components essentially adapted to create a shunt circuit (known in the art) capable of generating an impulsive signal which can be recognized by the second means MC2, as a result of a positive variation ΔV of the power supply alternating voltage on the electric line PL. Said shunt circuit may for instance be provided through capacitors C1 and C2 and through resistances R1 and R2, arranged as shown in Fig. 1 and sized appropriately: such a circuit behaves as a high-pass network, and represents a good example of a shunt circuit which may be used in the present invention.

The second electronic control means MC2 measure the value of time at which they receive said impulsive signal from the receiver circuit R. Said value of time, measured starting from a predetermined condition of the alternating voltage supplied to the electric appliance HA, corresponds to the value of time tᵢ*, based on which the second means MC2 carry out the decoding of the transmitted information. The electric appliance HA comprises second detection means ZCD2, preferably adapted to detect the zero crossing performed by the alternating voltage supplied to the electric appliance HA and to signal it to the second electronic control means MC2 . In order to decode the information transmitted by the electric appliance HA through the transmitter circuit P, the second means MC2 may use the second non-volatile memory M2, which stores, e.g. as a table or a formula, relations associating the measured values of time tᵢ* with corresponding pieces of information. By way of example and not by way of limitation, said relations may consist of the association between each of said pieces of information and a corresponding predetermined interval of values of time; the fact that the measured value of time tᵢ* belongs to said interval determines its association with the piece of information corresponding to the same interval. Fig. 3 shows schematically a possible sequence of waves of the alternating voltage supplied to the electric appliance HA, used for transmitting information according to the method being the subject of the present invention. If complex information is to be sent (i.e. information consisting of such a number of bits that said bits cannot be coded through a single value of time tᵢ), it is possible to subdivide said complex information into a sequence of S elementary pieces of information, each of which can be coded through a value of time tᵢ^{k}.

Said S elementary pieces of information can be transmitted in successive and contiguous periods of the voltage wave: by so doing, it is possible to transmit information of any length. The maximum transmission frequency of elementary information is therefore equal to the frequency F of the alternating voltage supplied to the electric appliance HA, wherein F=1/T. Considering that n bits can be coded in each elementary piece of information, it follows that the maximum number of bits per second (bit rate) which can be transmitted according to the transmission method being the subject of the present invention is equal to F_{b}=n·F.

It is clear from the above description that the present invention, while retaining economic advantage compared to power line communication, overcomes the mentioned drawbacks related to power modulation as described in WO02/21664A1.

In fact, the variations in the power supply voltage of the electric appliance HA, generated by the control and/or monitoring device SA, produce no significant noise toward the power supply source Vₐ because they are limited compared to the instantaneous value of the power supply voltage, thus requiring no filtering system in order to comply with electromagnetic compatibility laws, in particular those regulating emissions carried on the power supply network. Furthermore, the limited amplitude of said reductions causes no significant reduction in the energy flow supplied to the electric appliance HA; as a result, it is possible to carry out transmissions in succession with a frequency equal to that of the alternating voltage supplied to the electric appliance HA, i.e. by transmitting a piece of information in each period of the alternating voltage supplied to the electric appliance HA without having to interpose whole voltage waves. In addiction, if the receiver means R are so provided as to be able to detect both positive variations and negative variations in the power supply voltage, it will be possible to transmit a piece of information in every half period of the alternating voltage supplied to the electric appliance HA, thereby obtaining a transmission frequency being twice the frequency F of the alternating voltage supplied to the electric appliance HA. Substantially, this may be obtained by using a pair of shunt circuits similar to the one shown in Fig. 1.

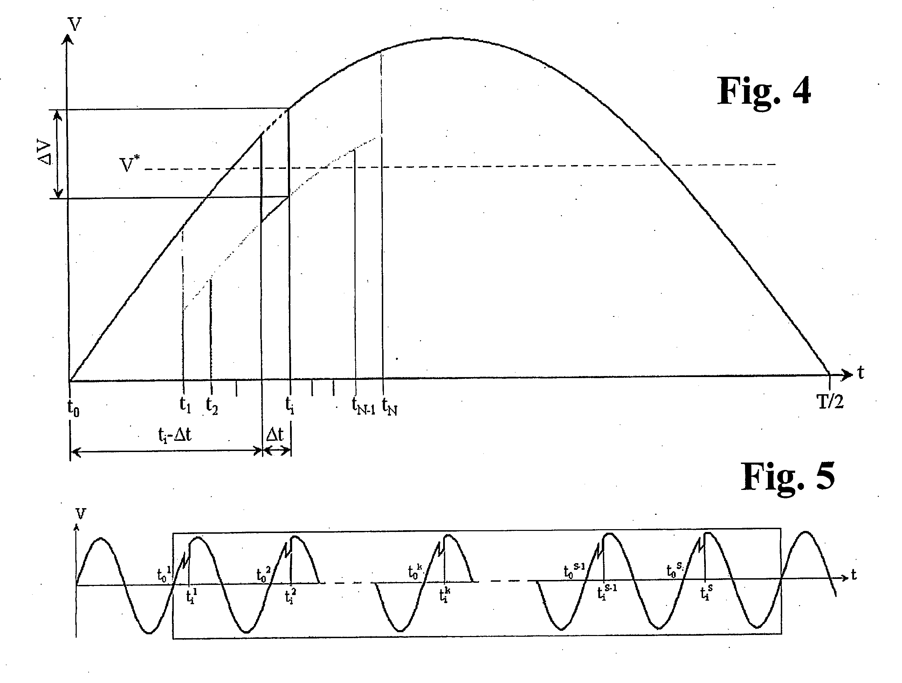

According to a first advantageous variant of the present invention, illustrated in Fig. 4, the reduction in the alternating voltage supplied to the electric appliance HA, in particular a household appliance, has a predetermined duration Δt, in particular a duration Δt which is adequately short compared to the period T of the alternating voltage wave (preferably 1% to 10% of period T). This can be obtained by conceiving the electronic switch ES in such a way that it can be controlled, through the first electronic control means MC1, both in the opening and in the closing phases: for example, by providing the electronic switch ES with at least one MOSFET type transistor.

With a single MOSFET device it is possible to perform controlled reductions in the power supply voltage on one type of half waves only, i.e. either positive or negative ones, depending on how the device is connected in the third branch of the transmitter circuit P. In fact, since the MOSFET device is a unidirectional current switch, it must be controlled by the first means MC1 only during the half-waves (positive or negative) corresponding to a power supply current of the electric appliance HA, the circulation direction thereof being the one for which the MOSFET device can act as a switch. An implementation of the electronic switch ES with a pair of MOSFET devices, suitably connected to each other (i.e. so that said pair can act as a switch in both possible circulation directions of the power supply current of the electric appliance HA), instead allows to generate controlled reductions in the power supply voltage of the electric appliance HA on both types of half waves. The above connection may be obtained by connecting the two MOSFET devices to each other in series: for example, if two N-channel MOSFET devices are used, they must be connected in series with common source.

As described above and illustrated in Fig. 2, the coding of the information to be transmitted, according to said first variant, occurs by associating said information with the value of time tᵢ at which there is a positive variation ΔV corresponding to the end of the reduction in the alternating voltage supplied to the electric appliance HA. Said first variant proves to be advantageous compared to the above-described method, illustrated in Fig. 2, because the energy subtracted from the power supply of the electric appliance HA during the transmission of information is significantly less. Moreover, since the energy subtracted from the power supply of the electric appliance HA is dissipated on the electronic means D, said first variant offers the additional advantage of providing a reduction in the energy dissipated on the means D, thus allowing to use means D sized for a lower maximum admissible dissipated power.

Fig. 5 illustrates the transmission of complex information according to the first variant shown in Fig. 4. As illustrated in Fig. 3, it is possible to subdivide said complex information into a sequence of S elementary pieces of information, each of which can be coded through a value of time tᵢ^{k}, wherein 1 ≤ i ≤ N and 1 ≤ k ≤ S. Said first variant does not modify the maximum information transmission frequency from the control and/or monitoring device SA to the electric appliance HA.

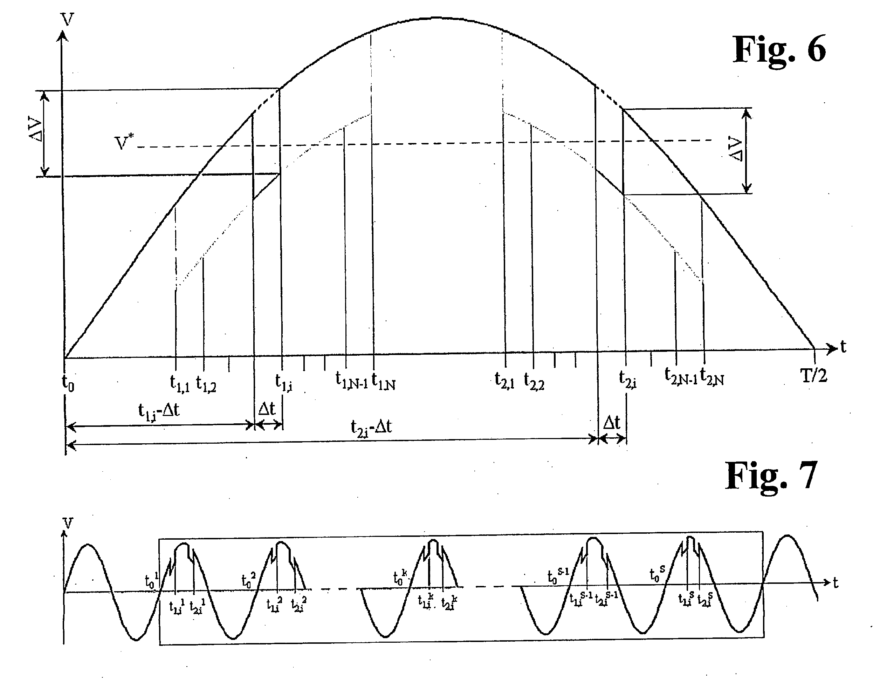

Said maximum transmission frequency may be increased through a second advantageous variant of the method according to the present invention. Said second variant is illustrated in Fig. 6 and provides for the generation, within a period T of the alternating voltage supplied to the electric appliance HA, of two or more variations ΔV, in particular a number Z of variations ΔV (by way of non-limiting example, Fig. 6 assumes a number Z=2 of positive variations ΔV, both generated in the half period T/2 corresponding to the positive half wave). According to the variant of Fig. 6, positive variations ΔV are generated through a succession of Z reductions in the alternating voltage supplied to the electric appliance HA, each having a predetermined duration, in particular a duration Δt being adequately short compared to the period T of the alternating voltage wave (preferably 1% to 10% of period T). The information to be transmitted is coded by the first electronic control means MC1 by associating each of said pieces of information with a value of time t_{j,i}, wherein 1 ≤ j ≤ Z and 1 ≤ i ≤ N. Each of said pieces of information is then transmitted by generating, through the transmitter circuit P, a positive variation ΔV at the value of time t_{j,i}, measured starting from the occurrence of a predetermined condition relating to the alternating voltage supplied to the control and/or monitoring device SA (in particular, said predetermined condition may advantageously be the zero crossing by the alternating voltage supplied to the device SA). Said second variant may be suitably implemented by using the same system adopted for implementing the first variant, wherein the electronic switch ES of the control and/or monitoring device SA is so provided as to comprise one or more MOSFET type transistors, in particular a pair of MOSFET devices suitably connected to each other.

Fig. 7 illustrates the transmission of complex information according to the second variant shown in Fig. 6. As illustrated in Fig. 3 and Fig. 5, it is possible to subdivide said complex information into a sequence of S elementary pieces of information, each of which can be coded through a value of time t_{j,i}^{k}. Said second variant allows to increase the maximum information transmission frequency from the control and/or monitoring device SA to the electric appliance HA, which becomes a multiple of the frequency F of the alternating voltage supplied to the electric appliance HA (the limit value thereof being F_{L}=Z·F). Considering that n bits can be coded in each elementary piece of information, it follows that the maximum number of bits per second (bit rate) which can be transmitted according to the second variant of the present invention is equal to F_{b}=n·Z·F.

Said second variant may conveniently be used whenever it is difficult to detect with sufficient precision the value of time to at which there is the occurrence of the predetermined condition relating to the alternating voltage supplied to the control and/or monitoring device SA. In order to get round this difficulty, the first of the Z positive variations ΔV may be used, rather than for transmitting information, for generating the time reference based on which the values of time t_{j,i}^{k} of the subsequent Z-1 positive variations ΔV will be measured. Thus the maximum information transmission frequency from the control and/or monitoring device SA to the electric appliance HA becomes equal to F_{L}=(Z-1)·F.

The present invention has been described with particular reference to an example of embodiment example and to advantageous variants thereof, but it is clear that many other variants are possible for those skilled in the art without departing from the scope defined by the annexed claims.

## Claims

1. Method for transmitting information on power supply electric line (PL) from a control and/or monitoring device (SA) to an electric appliance (HA), in particular a household appliance, said device (SA) being interposed between an electric energy source (Vₐ) and said electric appliance (HA), said device (SA) being supplied with alternating voltage and said electric appliance (HA) being supplied with alternating voltage through said device (SA), said method comprising the steps of:
i) associating a piece of information to be transmitted with a value of time (tᵢ), said value of time (tᵢ) being comprised within a set of predetermined values of time (t₁,...,t_{N}) and said predetermined values of time (t₁,...,t_{N}) being measured starting from the occurrence of a predetermined condition relating to the alternating voltage supplied to said device (SA),
and
ii) generating, at said value of time (tᵢ), a variation (ΔV) in the alternating voltage supplied to said electric appliance (HA),
wherein said variation (ΔV) is generated by reducing the alternating voltage supplied to said electric appliance (HA) and by ending the reduction in said alternating voltage at said value of time (tᵢ).

2. Method according to claim 1, wherein said reduction has a predetermined duration (Δt).

3. Method according to claim 1 or 2, wherein said predetermined condition is the zero crossing by the alternating voltage supplied to said device (SA).

4. Method according to claim 1 or 2 or 3, wherein said information consists of an array of bits.

5. Method according to claim 4, wherein said array of bits is made up of four bits.

6. Method according to any of the preceding claims, wherein said variation in the power supply voltage has a predetermined amplitude (ΔV).

7. Method according to any of the preceding claims, wherein two or more variations (ΔV) are generated within a period of said alternating voltage supplied to said electric appliance (HA).

8. Device (SA) for controlling and/or monitoring an electric appliance (HA), in particular a household appliance, said device (SA) being adapted to be interposed between an electric energy source (Vₐ) and said electric appliance (HA) and being adapted to be supplied with alternating voltage, **characterized in that** said device (SA) is adapted to transmit at least one piece of information on the power supply electric line (PL) by using the transmission method according to any of the preceding claims.

9. Device (SA) according to claim 8, **characterized in that** said device (SA) comprises:
i) first electronic control means (MC1);
ii) first detection means (ZCD1), preferably adapted to detect the zero crossing by the alternating voltage supplied to said device (SA) and to signal it to said first electronic control means (MC1), and
iii) a transmitter circuit (P), arranged in series between said electric energy source (Vₐ) and said electric line (PL) and controlled by said first electronic control means (MC1).

10. Device (SA) according to claim 9, **characterized in that** said transmitter circuit (P) comprises electronic means (D) adapted to cause a voltage drop when current flows therethrough, and an electronic switch (ES), said electronic switch being controlled by said first electronic control means (MC1) and said electronic means (D) being connected in parallel to said electronic switch (ES).

11. Device (SA) according to claim 10, **characterized in that** said transmitter circuit (P) also comprises an further switch (LS), connected in parallel to said electronic switch (ES) and controlled by said first electronic control means (MC1).

12. Device (SA) according to claim 10 or 11, **characterized in that** said electronic means (D) comprise at least one Zener diode, preferably two Zener diodes connected in series with common anode or cathode.

13. Device (SA) according to claim 10 or 11 or 12, **characterized in that** said electronic switch (ES) comprises at least one MOSFET type transistor.

14. Device (SA) according to claim 9 or 10 or 11 or 12 or 13, a first non-volatile memory (M1) being associated with said first electronic control means (MC1), **characterized in that** said first non-volatile memory (M1) stores relations between predetermined information and said values of time (t₁,...,t_{N}).

15. Electric appliance (HA), in particular a household appliance, said electric appliance (HA) being adapted to be supplied with alternating voltage, **characterized by** being adapted to receive at least one piece of information on power supply electric line (PL), transmitted by using the transmission method according to any of claims 1 to 7.

16. Electric appliance (HA) according to claim 15, **characterized by** comprising:
i) second electronic control means (MC2);
ii) second detection means (ZCD2), preferably adapted to detect the zero crossing by the alternating voltage supplied to said electric appliance (HA) and to signal it to said second electronic control means (MC2), and
iii) a receiver circuit (R), adapted to detect said variation (ΔV) in the alternating voltage supplied to said electric appliance (HA) and to send a signal to said second electronic control means (MC2) as a result of said detection.

17. Electric appliance (HA) according to claim 16, **characterized in that** said receiver circuit (R) is a shunt circuit (C1,C2,R1,R2).

18. Electric appliance (HA) according to claim 16 or 17, **characterized in that** said second electronic control means (MC2) are adapted to detect the value of time (tᵢ*) at which they receive said signal by said receiver circuit (R).

19. Electric appliance (HA) according to claim 18, a second non-volatile memory (M2) being associated with said second electronic control means (MC2), **characterized in that** said second electronic control means (MC2) are adapted to decode the information associated with said value of time (tᵢ*), based on relations stored in said second non-volatile memory (M2).

20. System for transmitting information on power supply electric line (PL), said system comprising a control and/or monitoring device (SA) and an electric appliance (HA), in particular a household appliance, **characterized in that** said device (SA) is as claimed in any of claims 8 to 14 and said electric appliance (HA) is as claimed in any of claims 15 to 19.

## Patentansprüche

1. Verfahren zum Übertragen von Informationen über eine elektrische Stromversorgungsleitung (PL) von einer Steuerungs- und/oder Überwachungsvorrichtung (SA) zu einem Elektrogerät (HA), insbesondere zu einem Haushaltsgerät, wobei die Vorrichtung (SA) zwischen einer elektrischen Energiequelle (V_{A}) und dem Elektrogerät (HA) zwischengeschaltet ist, die Vorrichtung (SA) mit Wechselspannung versorgt wird und das elektrische Gerät (HA) über die Vorrichtung (SA) mit Wechselspannung beaufschlagt wird, wobei das Verfahren die folgenden Schritte aufweist:
i) Zuordnen zu übertragender Informationen eines Zeitwerts (tᵢ), wobei der Zeitwert (tᵢ) in einer Gruppe von vorbestimmten Zeitwerten (t₁, ...tₙ) liegt und die vorbestimmten Zeitwerte (t₁, ..., tₙ) beginnend vom Auftreten einer vorbestimmten Bedingung bezogen auf die der Vorrichtung (SA) zugeführten Wechselspannung gemessen werden, und
ii) Erzeugen einer Änderung (ΔV) der dem Elektrogerät (HA) zugeführten Wechselspannung an dem Zeitwert (tᵢ),
wobei die Änderung (ΔV) durch Reduzierung der dem Elektrogerät (HA) zugeführten Wechselspannung und durch Beendigung der Reduzierung in der Wechselspannung bei dem Zeitwert (tᵢ) erzeugt wird.

2. Verfahren gemäß Anspruch 1, wobei die Reduktion eine vorbestimmte Zeitdauer (Δt) aufweist.

3. Verfahren gemäß Anspruch 1 oder 2, wobei die vorbestimmte Bedingung der Nulldurchgang der der Vorrichtung (SA) zugeführten Wechselspannung ist.

4. Verfahren gemäß Anspruch 1 oder 2 oder 3, wobei die Information aus einem Feld aus Bits besteht.

5. Verfahren gemäß Anspruch 4, wobei das Feld aus Bits aus 4 Bits aufgebaut ist.

6. Verfahren gemäß einem der vorstehenden Ansprüche, wobei die Änderung in der Versorgungsspannung eine vorbestimmte Amplitude (ΔV) aufweist.

7. Verfahren gemäß einer der vorstehenden Ansprüche, wobei zwei oder mehr Änderungen (ΔV) in einem Zeitraum erzeugt werden, in dem die Wechselspannung dem Elektrogerät (HA) zugeführt wird.

8. Vorrichtung (SA) zum Steuern und/oder Überwachen eines Elektrogerätes (HA), insbesondere eines Haushaltsgerätes, wobei die Vorrichtung (SA) zum Zwischenschalten zwischen einer elektrischen Energiequelle (Vₐ) und dem Elektrogerät (HA) vorbereitet ist und zum Versorgen mit Wechselspannung vorbereitet ist, **dadurch gekennzeichnet, dass** die Vorrichtung (SA) zum Übertragen von wenigstens einer Information über die elektrische Stromversorgungsleitung (PL) durch die Verwendung des Übertragungsverfahrens gemäß einem der vorstehenden Ansprüche vorbereitet ist.

9. Vorrichtung (SA) gemäß Anspruch 8, **dadurch gekennzeichnet, dass** die Vorrichtung (SA) umfasst:
i) erste elektronische Steuermittel (MC1);
ii) erste Erkennungsmittel (ZCD1), vorzugsweise vorbereitet zum Erkennen des Nulldurchgangs der der Vorrichtung (SA) zugeführten Wechselspannung und zum Signalisieren desselben an die ersten elektronischen Steuermittel (MC1) zu signalisieren, und
iii) eine Übertragungsschaltung (P), die zwischen der elektrischen Energiequelle (Vₐ) und der elektrischen Leitung (PL) in Serie geschaltet ist und von den ersten elektronischen Steuermitteln (MC1) gesteuert wird.

10. Vorrichtung (SA) gemäß Anspruch 9, **dadurch gekennzeichnet, dass** die Übertragungsschaltung (P) elektronische Mittel (D) aufweist, die zum Bewirken eines Spannungsabfalls vorbereitet sind, wenn der Strom dort hindurchfließt, und einen elektronischer Schalter (ES), wobei der elektronischer Schalter von den ersten elektronischen Steuermitteln (MC1) gesteuert wird und die elektronischen Mittel (D) parallel zu dem elektronischen Schalter (ES) geschaltet sind.

11. Vorrichtung (SA) gemäß Anspruch 10, **dadurch gekennzeichnet, dass** die Übertragungsschaltung (P) ferner einen weiteren Schalter (LS) aufweist, der parallel zu dem elektrischen Schalter (ES) geschaltet ist und von den ersten elektronischen Steuermitteln (MC1) gesteuert wird.

12. Vorrichtung (SA) gemäß Anspruch 10 oder 11, **dadurch gekennzeichnet, dass** die elektronischen Mittel (D) wenigstens eine Zener-Diode aufweisen, vorzugsweise zwei ZenerDioden, die in Reihe mit einer gemeinsamen Anode oder Katnode geschaltet sind.

13. Vorrichtung (SA) gemäß Anspruch 10 oder 11 oder 12, **dadurch gekennzeichnet, dass** der elektrische Schalter (ES) wenigstens einen Transistor eines MOSFET-Typs.

14. Vorrichtung (SA) gemäß Anspruch 9 oder 10 oder 11 oder 12 oder 13, wobei ein nichtflüchtiger Speicher (M1) mit den ersten elektronischen Steuermitteln (MC1) in Verbindung steht, **dadurch gekennzeichnet, dass** der erste nichtflüchtige Speicher (M1) Zusammenhänge zwischen vorbestimmten Informationen und den Zeitwerten (t₁, ..., tₙ) speichert.

15. Elektrogerät (HA), insbesondere ein Haushaltsgerät, wobei das Elektrogerät (HA) zur Versorgung mit Wechselstrom vorbereitet ist, **dadurch gekennzeichnet, dass** es zum Empfangen wenigstens einer Information über die elektrische Stromversorgungsleitung (PL) vorbereitet ist, die durch die Verwendung des Übertragungsverfahrens gemäß einer der Ansprüche 1 bis 7 übertragen wird.

16. Elektrogerät (HA) gemäß Anspruch 15, **gekennzeichnet durch** das Aufweisen von:
i) zweiten elektronischen Steuermitteln (MC2);
ii) zweiten Erkennungsmitteln (ZCD2), vorzugsweise vorbereitet zum Erkennen des Nulldurchgangs der dem Elektrogerät (HA) zugeführten Wechselspannung und zum Signalisieren desselben an die zweiten elektronischen Steuermittel (MC2), und
iii) einer Empfangsschaltung (R), die zum Erkennen der Änderung (ΔV) in der dem Elektrogerät (HA) zugeführten Wechselspannung vorbereitet ist und zum Senden eines Signals an die zweiten elektronischen Steuermitteln (MC2) als Ergebnis der Erkennung vorbereitet ist.

17. Elektrogerät (HA) gemäß Anspruch 16, **dadurch gekennzeichnet, dass** die Empfangsschaltung (R) als Messschaltung bzw. Nebenschlusskreis (C1, C2, R1, R2) ausgebildet ist.

18. Elektrogerät (HA) gemäß Anspruch 16 oder 17, **dadurch gekennzeichnet, dass** die zweiten elektronischen Steuermittel (MC2) zum Erkennen des Zeitwerte (tᵢ*) an dem diese das Signal über die Empfangsschaltung (R) empfangen, vorbereitet sind.

19. Elektrogerät (HA) gemäß Anspruch 18, mit einem zweiten mit den zweiten elektronischen Steuermitteln (MC2) verbundenen nichtflüchtigen Speicher (M2), **dadurch gekennzeichnet, dass** die zweiten elektronischen Steuermittel (MC2) zum Decodieren der mit dem Zeitwert (tᵢ*) verbundenen Information vorbereitet sind, basierend auf den in dem zweiten nichtflüchtigen Speicher (M2) gespeicherten Zusammenhängen.

20. System zum Übertragen von Informationen über eine elektrische Stromversorgungsleitung (PL), wobei das System eine Steuerungs- und/oder Überwachungsvorrichtung (SA) und ein Elektrogerät (HA), insbesondere ein Haushaltsgerät, aufweist, **dadurch gekennzeichnet, dass** die Vorrichtung (SA) wie in einem der Ansprüche 8 bis 14 beansprucht und das elektrische Gerät (HA) wie in einem der Ansprüche 15 bis 19 beansprucht ausgeführt sind.

## Revendications

1. Procédé pour transmettre une information sur une ligne électrique d'alimentation (PL) à partir d'un dispositif de commande et/ou de surveillance (SA) à destination d'un appareil électrique (HA), en particulier d'un appareil ménager, ledit dispositif (SA) étant interposé entre une source d'énergie électrique (Vₐ) et un appareil électrique (HA), ledit dispositif (SA) étant alimenté avec une tension alternative et ledit appareil électrique (HA) étant alimenté avec une tension alternative à travers ledit dispositif (SA), ledit procédé incluant les étapes comprenant le fait de :
i) associer un volume d'information à transmettre à une valeur de temps (tᵢ), ladite valeur de temps (tᵢ) étant comprise à l'intérieur d'un ensemble de valeurs de temps (t₁, ..., t_{N}) prédéterminées, et lesdites valeurs de temps prédéterminées (t₁, ..., t_{N}) étant mesurées en commençant à partir de l'occurrence d'un état prédéterminé se rapportant à la tension alternative fournie au dit dispositif (SA), et
ii) générer, au niveau de ladite valeur de temps (tᵢ), une variation (ΔV) de la tension alternative fournie au dit appareil électrique (HA),
dans lequel ladite variation (ΔV) est générée en réduisant la tension alternative fournie au dit appareil électrique (HA) et en mettant fin à la réduction de ladite tension alternative au niveau de ladite valeur de temps (tᵢ).

2. Procédé selon la revendication 1, dans lequel ladite réduction a une durée prédéterminée (Δt).

3. Procédé selon la revendication 1 ou 2, dans lequel ledit état prédéterminé est le passage par zéro de la tension alternative fournie au dit dispositif (SA).

4. Procédé selon la revendication 1 ou 2 ou 3, dans lequel ladite information est constituée d'un agencement de binaires.

5. Procédé selon la revendication 4, dans lequel ledit agencement de binaires est composé de quatre binaires.

6. Procédé selon l'une quelconque des revendications précédentes, dans lequel ladite variation de tension d'alimentation électrique présente une amplitude prédéterminée (ΔV).

7. Procédé selon l'une quelconque des revendications précédentes, dans lequel deux variations (ΔV), ou davantage, sont générées dans les limites d'une période de ladite tension alternative fournie au dit appareil électrique (HA).

8. Dispositif (SA) permettant de commander et/ou de surveiller un appareil électrique (HA), en particulier un appareil ménager, ledit dispositif (SA) étant adapté pour être interposé entre une source d'énergie électrique (Vₐ) et ledit appareil électrique (HA) et étant adapté pour être alimenté avec une tension alternative, **caractérisé en ce que** ledit dispositif (SA) est adapté pour transmettre au moins un volume d'information sur la ligne électrique d'alimentation (PL) en utilisant le procédé de transmission selon l'une quelconque des revendications précédentes.

9. Dispositif (SA) selon la revendication 8, **caractérisé en ce que** ledit dispositif (SA) comprend :
i) des premiers moyens de commande électroniques (MC1) ;
ii) des premiers moyens de détection (ZCD1), adaptés, de préférence, pour détecter le passage par zéro de la tension alternative fournie au dit dispositif (SA) et pour le signaler aux dits premiers moyens de commande électroniques (MC1), et
iii) un circuit émetteur (P), agencé en série entre ladite source de courant électrique (Vₐ) et ladite ligne électrique (PL) et commandé par lesdits premiers moyens de commande électroniques (MC1).

10. Dispositif (SA) selon la revendication 9, **caractérisé en ce que** ledit circuit émetteur (P) comporte des moyens électroniques (D) adaptés pour provoquer une chute de tension lorsque le courant circule à travers lui, et un commutateur électronique (ES), ledit commutateur électronique étant commandé par lesdits premiers moyens de commande électroniques (MC1) et lesdits moyens électroniques (D) étant connectés en parallèle au dit commutateur électronique (ES).

11. Dispositif (SA) selon la revendication 10, **caractérisé en ce que** ledit circuit émetteur (P) comporte également un autre commutateur (LS), connecté en parallèle au dit commutateur électronique (ES) et commandé par lesdits premiers moyens de commande électroniques (MC1).

12. Dispositif (SA) selon la revendication 10 ou 11, **caractérisé en ce que** lesdits moyens électroniques (D) comportent au moins une diode Zener, de préférence, deux diodes Zener connectées en série avec une anode ou une cathode commune.

13. Dispositif (SA) selon la revendication 10 ou 11 ou 12, **caractérisé en ce que** ledit commutateur électronique (ES) comporte au moins un transistor de type MOSFET.

14. Dispositif (SA) selon la revendication 9 ou 10 ou 11 ou 12 ou 13, une première mémoire non volatile (M1) étant associés aux dits premiers moyens de commande électroniques (MC1), **caractérisé en ce que** ladite première mémoire non volatile (M1) stocke des relations entre une information prédéterminée et lesdites valeurs de temps (t₁, ..., t_{N}).

15. Appareil électrique (HA) en particulier appareil ménager, ledit appareil électrique (HA) étant adapté pour être alimenté avec une tension alternative, **caractérisé par** le fait d'être adapté pour recevoir au moins un volume d'information sur une ligne électrique d'alimentation (PL), transmise en utilisant le procédé de transmission selon l'une quelconque des revendications 1 à 7.

16. Appareil électrique (HA) selon la revendication 15, **caractérisé par** le fait de comporter :
i) des seconds moyens de commande électroniques (MC2) ;
ii) des seconds moyens de détection (ZCD2), adaptés, de préférence, pour détecter le passage par zéro de la tension alternative fournie au dit appareil électrique (HA) et pour le signaler aux dits seconds moyens de commande électroniques (MC2), et
iii) un circuit récepteur(R), adapté pour détecter ladite variation (ΔV) de la tension alternative fournie au dit appareil électrique (HA) et pour transmettre un signal aux dits seconds moyens de commande électronique (MC2) en résultat de ladite détection.

17. Appareil électrique (HA) selon la revendication 16, **caractérisé en ce que** ledit circuit récepteur (R) est un circuit en dérivation (C1, C2, R1, R2).

18. Appareil électrique (HA) selon la revendication 16 ou 17, **caractérisé en ce que** lesdits seconds moyens de commande électroniques (MC2) sont adaptés pour détecter la valeur de temps (tᵢ*) à laquelle ils reçoivent ledit signal émis par ledit circuit récepteur (R).

19. Appareil électrique (HA) selon la revendication 18, une seconde mémoire non volatile (M2) étant associée aux dits seconds moyens de commande électroniques (MC2), **caractérisé en ce que** lesdits seconds moyens de commande électroniques (MC2) sont adaptés pour décoder l'information associée à ladite valeur de temps (tᵢ*) sur la base de relations stockées dans ladite seconde mémoire non volatile (M2).

20. Système permettant de transmettre une information sur une ligne électrique d'alimentation (PL), ledit système comprenant un dispositif de commande et/ou de surveillance (SA), et un appareil électrique (HA), en particulier un appareil ménager, **caractérisé en ce que** ledit dispositif (SA) est tel que revendiqué dans l'une quelconque des revendications 8 à 14 et **en ce que** ledit appareil électrique (HA) est tel que revendiqué dans l'une quelconque des revendications 15 à 19.
